# EUROPEAN PATENT APPLICATION

(11) **EP 2 201 994 A2**
(43) Date of publication of application: **30.06.2010**
(21) Application number: 09179163.2
(22) Date of filing: 15.12.2009
(51) Int. Cl.: B01D 53/14

(54) **Functionalised oligomeric absorbent for carbon dioxide and methods of using the same**

(30) Priority: 24.12.2008 US 343905
(71) Applicant: General Electric Company, Schenectady, NY 12345 (US)
(72) Inventor: Genovese, Sarah Elizabeth, Delmar, NY 12054 (US); Hancu, Dan, Clifton Park, NY 12065 (US); Perry, Robert James, Niskayuna, NY 12309 (US); Soloveichik, Grigorii Lev, Latham, NY 12110 (US); Wood, Benjamin Rue, Niskayuna, NY 12309 (US); Sonwane, Chandrashekhar Ganpatrao, Greenville, SC 29615 (US)
(74) Representative: Szary, Anne Catherine

(57) **Abstract**

A carbon dioxide absorbent comprising a liquid, nonaqueous oligomeric material, functionalized with one or more groups that reversibly react with CO₂ and/or have a high-affinity for CO₂ is provided. The absorbent may be utilized in methods to reduce carbon dioxide in an exhaust gas, and finds particular utility in power plants.

## Description

### BACKGROUND

Pulverized coal (PC) power plants currently produce over half the electricity used in the United States. In 2007, these plants emitted over 1900 million metric tons of carbon dioxide (CO₂), and as such, accounted for 83% of the total CO₂ emissions from electric power generating plants and 33% of the total US CO₂ emissions. Eliminating, or even reducing, these emissions will be essential in any plan to reduce greenhouse gas emissions.

Separating CO₂ from gas streams has been commercialized for decades in food production, natural gas sweetening, and other processes. Aqueous monoethanolamine (MEA) based solvent capture is currently considered to be the best commercially available technology to separate CO₂ from exhaust gases, and is the benchmark against which future developments in this area will be evaluated. Unfortunately, amine-based systems were not designed for processing the large volumes of flue gas produced by a PC plant. Scaling the amine-based CO₂ capture system to the size required for PC plants would result in an 83% increase in the overall cost of electricity for the PC plant. Applying this technology to all existing PC plants in the US would cost $125 billion per year, making MEA-based CO₂ capture an unlikely choice for large-scale commercialization.

There are many properties that desirably would be exhibited, or enhanced, in any CO₂ capture technology contemplated to be a feasible alternative to the currently utilized MEA-based systems. For example, any such technology would desirably exhibit a high net CO₂ capacity and elimination of the carrier solvent (for example water), and could provide lower capital and operating costs (less material volume required to heat and cool, therefore less energy required). A lower heat of reaction would mean that less energy would be required to release the CO₂ from the material. Desirably, the technology would not require a pre-capture gas compression so that a high net CO₂ capacity could be achieved at low CO₂ partial pressures, lowering the energy required for capture. Technologies utilizing materials with lower viscosities would provide improved mass transfer, reducing the size of equipment needed, as well as a reduction in the cost of energy to run it. Low volatility and high thermal, chemical and hydrolytic stability of the material(s) employed could reduce the amount of material needing to be replenished. Of course, any such technology would also desirably have low material costs so that material make-up costs for the system would be minimized. Operability of CO₂ release at high pressures could reduce the energy required for CO₂ compression prior to sequestration. Finally, such technologies would also desirably exhibit reduced corrosivity to help reduce capital and maintenance costs, and further would not require significant cooling to achieve the desired net CO₂ loading, reducing operating costs.

Unfortunately, many of the above delineated desired properties interact and/or depend on one another, so that they cannot be varied independently and trade-offs are required. For example, in order to have low volatility, the materials used in any such technology typically must have a fairly large molecular weight, but to have low viscosity, the materials must have a low molecular weight. To have a high CO₂ capacity at low pressures, the overall heat of reaction needs to be high, but to have low regeneration energy, the overall heat of reaction needs to be low.

Desirably, a CO₂ capture technology would be provided that optimizes as many of the above desired properties as possible, yet without causing substantial detriment to other desired properties. At a minimum, in order to be commercially viable, such technology would desirably be low cost, and utilize materials(s) having low volatility, high thermal stability and a high net capacity for CO₂.

### BRIEF DESCRIPTION

In a first aspect, there is provided a carbon dioxide absorbent comprising a liquid, nonaqueous oligomeric material, functionalized with one or more groups that reversibly react with CO₂ and/or have a high-affinity for CO₂.

Also, a second aspect provides a method for reducing the amount of carbon dioxide in a process stream comprising contacting the stream with a carbon dioxide absorbent comprising a liquid, nonaqueous, oligomeric material, functionalized with one or more groups that reversibly react with CO₂ and/or have a high-affinity for CO₂.

In a third aspect, a power plant is provided, comprising a carbon dioxide removal unit further comprising a carbon dioxide absorbent comprising a liquid, nonaqueous oligomeric material, functionalized with one or more groups that reversibly react with CO₂ and/or have a high-affinity for CO₂.

A method of generating electricity with reduced carbon dioxide emissions is also provided. The method comprises combusting a fuel (pulverized coal, liquid hydrocarbon, natural gas and the like) and directing the flue gas comprising carbon dioxide to an electricity generating equipment, e.g. steam or gas turbine and then to a carbon dioxide removal unit comprising a carbon dioxide absorbent comprising a liquid, nonaqueous oligomeric material, functionalized with one or more groups that reversibly react with CO₂ and/or have a high-affinity for CO₂.

### DRAWINGS

These and other features, aspects, and advantages of the present invention will become better understood when the following detailed description is read with reference to the accompanying drawings in which like characters represent like parts throughout the drawings, wherein:
FIG. 1 is a graphical depiction of the CO₂ absorption data for an aminopropyl terminated polydimethylsiloxane as measured by gravimetric gas sorption analysis at both 25°C and 60°C and pressures of 0.1, 0.2, 0.5, 1, 4 and 7 bar;
FIG. 2 is a graphical depiction of the 60°C isotherms for unfunctionalized polydimethylsiloxane and an aminosilicone; and
FIG. 3 is a graphical depiction of the rate of CO₂ absorption by an aminosilicone.

### DETAILED DESCRIPTION

Unless defined otherwise, technical and scientific terms used herein have the same meaning as is commonly understood by one of skill in the art to which this invention belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not limited to any one position or spatial orientation. If ranges are disclosed, the endpoints of all ranges directed to the same component or property are inclusive and independently combinable (e.g., ranges of "up to about 25 wt.%, or, more specifically, about 5 wt.% to about 20 wt.%," is inclusive of the endpoints and all intermediate values of the ranges of "about 5 wt.% to about 25 wt.%," etc.). The modifier "about" used in connection with a quantity is inclusive of the stated value and has the meaning dictated by the context (e.g., includes the degree of error associated with measurement of the particular quantity).

The subject matter disclosed herein relates generally to carbon dioxide absorbents, power plants incorporating them, and methods of using the absorbents to absorb carbon dioxide from process streams, e.g., as may be produced by methods of generating electricity. Conventional carbon dioxide absorbents lack one or more of the properties considered important, if not critical, in the commercial feasibility of their use in many technologies. MEA-based aqueous absorbents, for example, were not designed for use with large volumes of exhaust gas. As a result, use of these absorbents in such processes is extremely energy intensive and costly - too costly for implementation into power plants for post combustion CO₂ capture.

There are currently provided carbon dioxide absorbents comprising liquid, nonaqueous oligomeric materials. Oligomeric materials are defined as molecules having between two and twenty repeat units. More specifically, the oligomeric materials with low vapor pressure are functionalized with groups that either react reversibly with, or have a high affinity for, CO₂. Many of these absorbents exhibit a plurality of the properties considered critical to the provision of an economically feasible alternative to MEA based capture, e.g., they are liquid through a large range of temperatures, non-volatile, thermally stable, and do not require a carrier fluid.

Further, the present absorbents can be provided with a high CO₂ capacity via synthesis with a high degree of functionality.

Desirably, the present absorbent comprises a CO₂-philic, short chain oligomer, e.g., comprising less than about 20 repeating, monomeric units. As used herein, the term "CO₂-philic short chain oligomer" means an oligomer that has an affinity for CO₂, as may be evidenced by solubility in liquid or supercritical CO₂, or an ability to absorb CO₂. Liquid oligomers such as poly(siloxanes), poly(ethylene glycols), poly(propylene glycols) and perfluorinated polyethers, e.g., poly(flurorethylene), are non-limiting examples of CO₂-philic short chain oligomers suitable for use in the present absorbent. These, as well as other exemplary oligomers are shown below and may be derivatized on chain or at the end of the oligomer or may be co- or teroligomers:

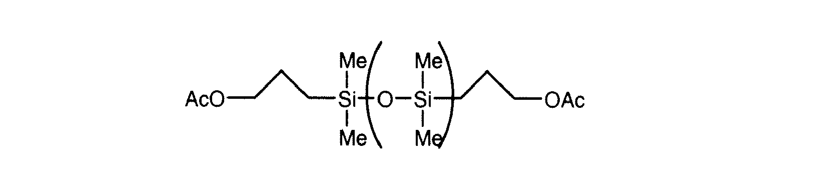

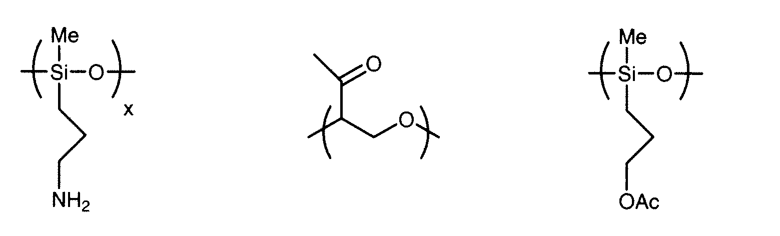

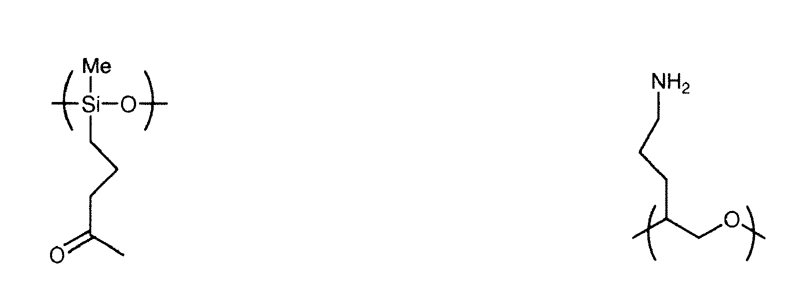

Of these, silicones are particularly well-suited for use in the present absorbents. Also correctly referred to as polymerized siloxanes or polysiloxanes, silicones are mixed inorganic-organic polymers or oligomers with the chemical formula [R₂SiO]ₙ, wherein R comprises a linear, branched or aromatic organic group of any number of carbons, e.g., methyl ethyl, phenyl, etc. These materials thus comprise an inorganic silicon-oxygen backbone (...Si-O-Si-O-Si-O-...) with organic side groups attached to the silicon atoms, which are four-coordinate. These silicones may be linear with R and OR' end-capping groups or cyclic containing only repeating units. An example of the latter is octamethylcyclotetrasiloxane (also known as D4).

Silicones are non-volatile even at short chain lengths and liquid at room temperature. They are typically low cost, stable at high temperatures, e.g., up to about 150°C, and typically may not require the use of additional solvents to be utilized as the present carbon dioxide absorbent. Silicones are also readily functionalized, and so, could be functionalized with groups that increase their affinity for CO₂.

Length of the oligomer chain can be easily controlled during synthesis that allows control of such physical properties as viscosity and boiling point. In addition, siloxane bonds are thermally stable and hydrolytically stable in the absence of strong acids or bases. Many silicones precursors are commercially available, and so advantageously, large scale production capabilities would not have to be developed. Many of these may be utilized in the present invention. One example of a silicone suitable for functionalization in the present invention, and available from a variety of sources, comprises polyhydridomethylsiloxane.

The oligomeric material may desirably be functionalized with groups that enhance its net capacity for CO₂. Functional groups that are expected to be CO₂-philic, and thus to enhance the solubility of CO₂ in an oligomeric material they functionalize, include acetates, carbonates, ketones and amines. The particular functional group utilized will depend upon the oligomeric material chosen, and for those embodiments wherein the oligomeric material comprises a siloxane, amine functionality may be suitable, since many aminosiloxanes are readily commercially available, and are readily further functionalized if desired or required in order to increase CO₂ reactivity. Examples of amine functional groups that exhibit CO₂-reactivity include aminopropyl, aminoethylaminopropyl, aminoethyl-aminoisobutyl, piperazine-propyl and imidazoyl propyl.

Functional groups may be located in a side chain and also be the end-capping groups. Aminoethyl-aminopropyl siloxane oligomers with functional groups in the side chain, for example the molecule shown below has maximum theoretical CO₂ capacity of about 20 wt%, compared to 10 wt% for 30 wt% aqueous MEA.

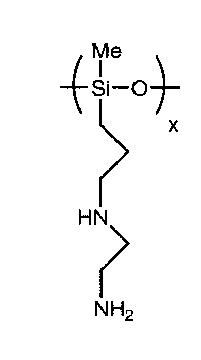

One other example of an aminosiloxane with end-capped functional groups suitable for use in the present absorbent is aminopropyl terminated polydimethyldisiloxane:

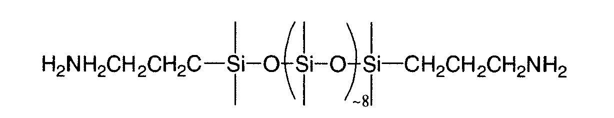

One such aminosiloxane is used for hair conditioning and commercially available from Gelest with a number average molecular weight of from about 850 to about 900, and a calculated CO₂ absorption capacity of from about 4.4 to about 5.2%. It is expected that the addition of further amine functionality will result in an increase in this absorption capacity.

Other functional groups that may at least marginally enhance the net capacity of the oligomers for CO₂ include, but are not limited to acetate, carbonate, ester, ketone, methylamine, ethylamine, propylamine, aminoethylaminopropyl, aminoethylaminoisobutyl, piperazinopropyl, imidazoylpropyl, or combinations of these:

| **Functional Group** | **Structure** |
|---|---|
| acetate | 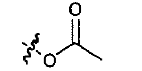 |
| carbonate | 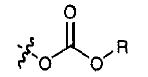 |
| ester | 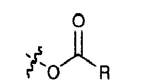 |
| ketone | 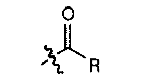 |
| amine | 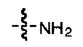 |
| methylamine | 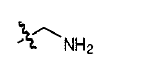 |
| ethylamine | 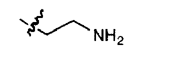 |
| propylamine | 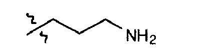 |
| aminoethylaminopropyl | 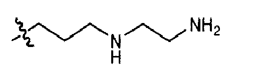 |
| aminoethylaminoisobutyl | 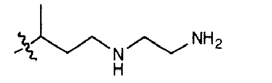 |
| piperazinopropyl | 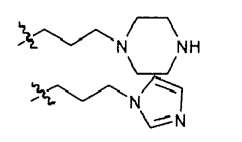 |
| imidazoylpropyl | |

Those of ordinary skill in the art of polymer chemistry are well versed in methods of adding functional groups to the backbone of an oligomer useful in the present absorbent. Numerous methods of attachment of functional groups are known such as hydrosilylation and displacement as shown in Michael A. Brook's book Silicon in Organic, Organometallic, and Polymer Chemistry (Wiley VCH Press, 2000).

Optionally, the absorbent may also include other components, such as, e.g., oxidation inhibitors to increase the oxidative stability and anti-foaming agents. The use of oxidation inhibitors, also called antioxidants, can be especially advantageous in those embodiments of the invention wherein the functional groups comprise amine groups.

The carbon dioxide absorbents provided herein are expected to provide great improvement when utilized to remove CO₂ from process gases, as compared to those currently commercially available and/or utilized for this purpose. As such, a method of reducing the carbon dioxide in a process stream is provided and comprises contacting the process stream with the carbon dioxide absorbents described herein. The process stream so treated may be any wherein the level of CO₂ therein is desirably reduced, and in many processes, CO₂ is desirably reduced at least in the exhaust streams produced thereby. The process stream is typically gaseous but may contain solid or liquid particulates, and may be at a wide range of temperatures and pressures depending on the application.

The carbon dioxide absorbents, and methods of using them, provided herein are low cost. Further, the absorbents have low volatility, high thermal stability and are either commercially available with, or can be provided with, a high net capacity for CO₂, and as such, are appropriate for large scale implementation. And so, there is also provided a power plant utilizing the present absorbents, and method of utilizing the absorbents in a method for generating electricity with reduced carbon dioxide emissions. Use of the present absorbents and methods on a large, plant scale is not expected to substantially increase the cost of the electricity generated thereby.

### Examples

CO₂ absorption in the following examples was determined using a gravimetric gas sorption analyzer (Hiden-Isochema IGA-001) fitted with a 99.998% pure CO₂ (Airgas) by the following process.

The sample is outgased at 60°C for from about 8 to about 24 hours, until the sample weight stabilizes. Once stabilized, the dry mass is recorded. The temperature and pressure are set to the desired test levels, and the system allowed to come to equilibrium for at least 3 hours, or until the sample weight is relatively stable, i.e., changes <1 µg. The equilibrium weight at this set of conditions is recorded, and the pressure set to the next desired test pressure. The process is repeated for all desired pressures. The process may also be repeated for all desired temperatures, at a constant pressure. The weight values are corrected for buoyancy values after all tests are complete.

To verify accuracy of this measurement method, an ionic liquid commonly utilized for CO₂ absorption studies, 1-buty-3-methylimidazolium hexafluorophosphate (Aldrich) was measured using the same. CO₂ absorption data was obtained at 10°C and 25°C, and the results are in a good agreement with the literature values (Shiflett, M.B., Yokozeki, A. Solubilities and Diffusivities of Carbon Dioxide in Ionic Liquids: [bmim][PF6] and [bmim][BF4]. Ind. Eng. Chem. Res., 44 (2005) 4453 ) within the experimental error, thus showing the applicability of this technique to the measurement of the CO₂ uptake of aminosilicones.

### Example 1

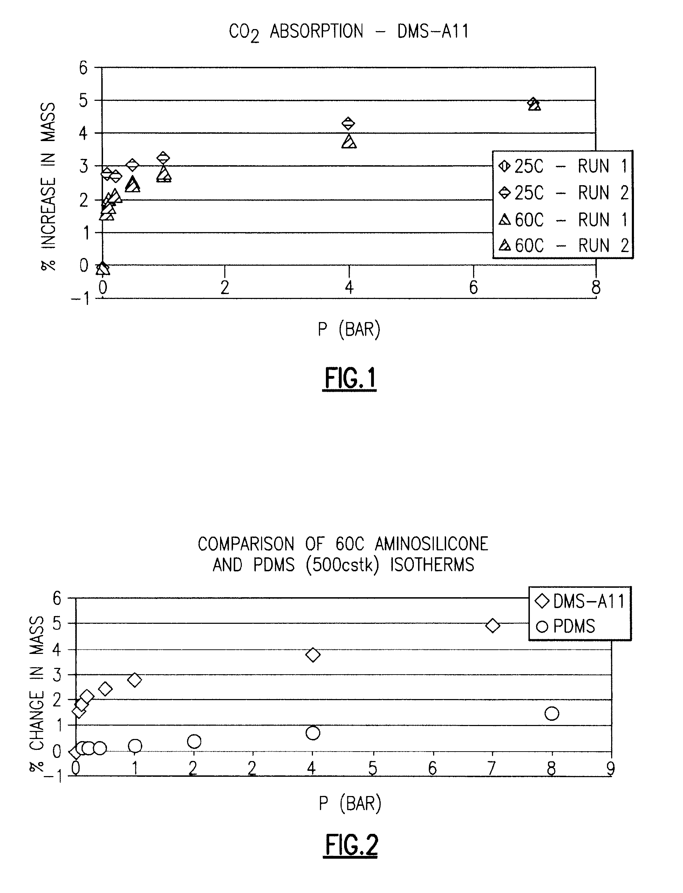

The CO₂ absorption of unfunctionalized polydimethylsiloxane (PDMS) and an aminopropyl terminated polydimethylsiloxane (DMS-A11, from Gelest, Philadelphia, PA) were measured and compared. The CO₂ absorption data for DMS-A11at both 25°C and 60°C and pressures of 0.1, 0.2, 0.5, 1, 4 and 7 bar are shown in Figure 1. As shown, as the pressure increases, the CO₂ absorption for DMS-A11 approaches its maximum theoretical CO₂ capacity.

The 60°C PDMS isotherm and the 60°C DMS-A11 aminosilicone isotherm are shown in Figure 2. As shown, the CO₂ absorption is greatly enhanced in the aminosilicone as compared to the unfunctionalized PDMS.

### Example 2

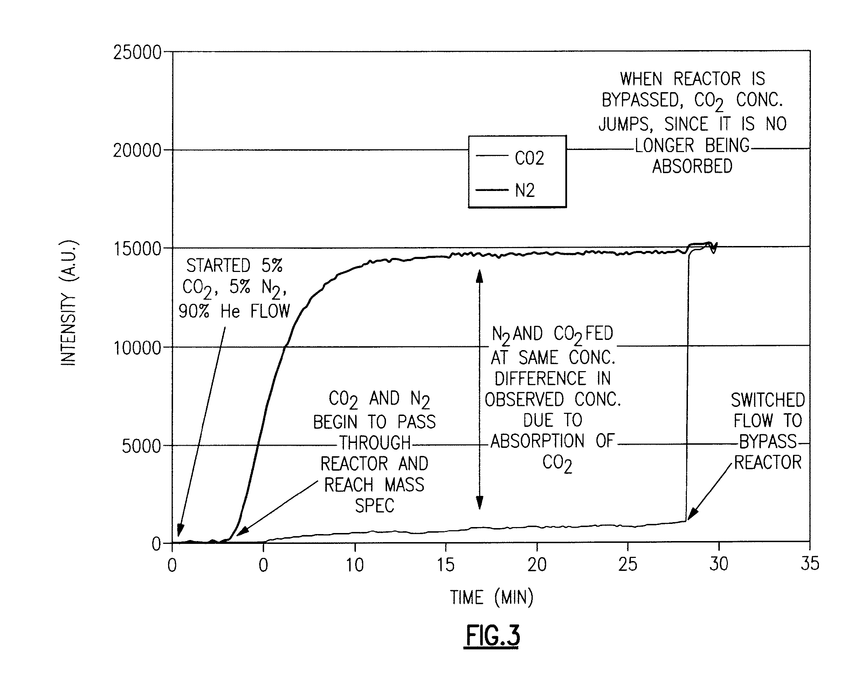

CO₂ in an inert carrier gas was bubbled through an aminopropyl terminated polydimethylsiloxane (DMS-A11, from Gelest, Philadelphia PA) to show the speed with which the sample absorbs CO₂. More specifically, a 14g sample of DMS-A11 was added to a 20 mL stirred glass reactor. A flow of 50 mL/min He was established through the reactor, and the reactor/sample heated to a temperature of about 80°C to degas the sample. The reactor/sample was then cooled to about 60°C and the flow of He stopped. A gas stream of 5% CO₂, 5% N₂ and 90% He at 50 mL/min was bubbled through the sample, and the products from the reactor analyzed via mass spectrometry. After 28 minutes, this same gas flow was switched to bypass the reactor and monitored by mass spectrometry to provide a baseline. The results of this experiment are shown in Figure 3.

As shown, when the gas mixture is initially detected by the mass spectrometer, the N₂ signal quickly increases in intensity, and then levels off. In contrast, the CO₂ signal is initially extremely weak and slowly increases in intensity. Although CO₂ and N₂ are fed at the same concentration, the CO₂ signal is less than 10% of the N₂ signal, indicating that most of the CO₂ is being absorbed. After 28 minutes, the gas mixture is set to bypass the reactor and flow directly to the mass spectrometer. At this point, the N₂ signal remains unchanged, indicating that N₂ was not absorbed by the aminosilicone. In contrast, the CO₂ signal jumps to match the intensity of the N₂ signal, since CO₂ is no longer being absorbed. Under the conditions of this experiment, over 90% of the CO₂ was absorbed, indicating that the absorption of CO₂ in aminosilicones is not unreasonably slow.

While only certain features of the invention have been illustrated and described herein, many modifications and changes will occur to those skilled in the art. It is, therefore, to be understood that the appended claims are intended to cover all such modifications and changes as fall within the true scope of the invention.

## Claims

1. A carbon dioxide absorbent comprising a liquid, nonaqueous oligomeric material, functionalized with one or more groups that reversibly react with CO₂ and/or have a high-affinity for CO₂.

2. The absorbent of claim 1, wherein the functionalized oligomeric material comprises one or more silicones, polyglycols, polyethers, perfluorinated polyethers, or combinations of these.

3. The absorbent of claim 1 or claim 2, wherein the functional group(s) comprise(s) one or more acetates, carbonates, ketones, amines or combinations of these.

4. The absorbent of any preceding claim, wherein the functionalized oligomeric material optionally comprises an antioxidant.

5. The absorbent of any preceding claim, wherein the functional group(s) comprise(s)one or more di-, tri- and polyamines or combinations of these.

6. The absorbent of any preceding claim, wherein the materials oligomeric chain contains both silicone and polyether or polyimine blocks.

7. A method for reducing the amount of carbon dioxide in a process stream comprising contacting the stream with a carbon dioxide absorbent comprising a liquid, nonaqueous oligomeric material, functionalized with one or more groups that reversibly react with CO₂ and/or have a high-affinity for CO₂.

8. The method of claim 7, wherein the functionalized oligomeric material comprises one or more silicones, polyglycols, polyethers, perfluorinated polyethers, or combinations of these

9. The method of claim 7 or claim 8, wherein the functional group(s) comprise(s) one or more acetates, carbonates, ketones, amines or combinations of these.

10. The method of any one of claims 7 to 9, wherein the functional group(s) comprise(s) one or more di-, tri- and polyamines or combinations of these.

11. The method of any one of claims 7 to 10, wherein the process stream comprises an exhaust stream.

12. A power plant comprising a carbon dioxide removal unit further comprising a carbon dioxide absorbent comprising a liquid, nonaqueous oligomeric material, functionalized with one or more groups that reversibly react with CO₂ and/or have a high-affinity for CO₂.

13. A method of generating electricity with reduced carbon dioxide emissions comprising combusting a fuel to produce an exhaust gas comprising carbon dioxide and directing the exhaust gas to a carbon dioxide removal unit comprising a carbon dioxide absorbent comprising a liquid, nonaqueous oligomeric material, functionalized with one or more groups that reversibly react with CO₂ and/or have a high-affinity for CO₂.

14. The method of claim 13, wherein the functionalized oligomeric material comprises one or more silicones, polyglycols, polyethers, perfluorinated polyethers, or combinations of these

15. The method of claim 13 or claim 14, wherein the functional group(s) comprise(s) one or more acetates, carbonates, ketones, amines or combinations of these.
